# EUROPÄISCHE PATENTANMELDUNG

(11) **EP 1 621 485 A1**
(43) Veröffentlichungstag der Anmeldung: **01.02.2006**
(21) Anmeldenummer: 05014816.2
(22) Anmeldetag: 07.06.2002
(51) Int. Cl.: B65G 17/42, B65G 49/04

(54) **Fördersystem zum Transport von Karosserien**

(30) Priorität: 04.07.2001 DE 10132351
(62) Teilanmeldung aus: 02012686.8
(71) Anmelder: EISENMANN Maschinenbau GmbH & Co. KG, 71032 Böblingen (DE)
(72) Erfinder: Ehrenleitner, Franz, 72213 Altensteig-Walddorf (DE)
(74) Vertreter: Ostertag, Ulrich

(57) **Zusammenfassung**

Ein Fördersystem zum Transport von Gegenständen umfaßt mindestens eine Tragschiene (1,2), die in unterschiedlichen Höhen über dem Boden verläuft. Auf dem Tragschienensystem (1,2) rollt eine Mehrzahl von Wagen (3) ab, die eine Last aufnehmen können. Oberhalb des Tragschienensystems (1,2), in der Draufsicht parallel zu diesem, verläuft eine Antriebsschiene (16), die ein Antriebsmittel (17), z. B. eine Kette oder eine Vielzahl von Schubstangen, führt. Die Antriebsschiene (16) und das von dieser geführte Antriebsmittel (17) verlaufen in konstanter Höhe über dem Boden. Die die Wagen (3) vorantreibende Kraft wird auf diese von dem Antriebsmittel (17) mit Hilfe von Scherengittern als Verbindungseinrichtungen (18) übertragen, die den unterschiedlichen vertikalen Abstand zwischen dem Tragschienensystem (1,2) und dem Antriebsmittel (17) zu kompensieren vermögen.

## Beschreibung

Die Erfindung betrifft ein Fördersystem zum Transport von Karosserien mit
a) mindestens einer Tragschiene, die sich in unterschiedlicher Höhe über dem Boden erstreckt;
b) mindestens einem eine Karosserie aufnehmenden Wagen, der an der Tragschiene mittels Rollen abläuft;
c) mindestens einer Antriebsschiene, die oberhalb der Tragschiene verläuft und ein sich bewegendes Antriebsmittel führt;
d) mindestens einer Verbindungseinrichtung, welche eine Antriebsverbindung zwischen dem Antriebsmittel und dem Wagen herstellt,
   wobei
e) die Antriebsschiene mit dem Antriebsmittel in konstan-Höhe über dem Boden verläuft;
f) die Verbindungseinrichtung so ausgestaltet ist, daß sie die lokalen Variationen des vertikalen Abstands zwischen dem Antriebsmittel und der Tragschiene auszugleichen vermag.

Beim Transport von Karosserien mittels eines Fördersystems ist häufig ein Wechsel der Förderhöhe erforderlich. So müssen beispielsweise Fahrzeugkarosserien bei ihrer Lackierung in kontinuierlichem Durchlauf in ein Behandlungsbad eingetaucht und aus diesem wieder ausgehoben werden. Dieses Ein- und Austauchen geschieht über sog. "Schrägstrecken", in denen die Tragschieneunter einem entsprechenden Winkel gegenüber der Horizontalen verläuft.

Bei bekannten Zweischienen-Fördersystemen ähnlich denen der eingangs genannten Art verlief die Antriebsschiene sowohl in der Draufsicht als auch in der Höhe parallel zu dem darunter angeordneten Tragschienensystem, so daß also der vertikale Abstand zwischen Antriebsschiene und Antriebsmittel einerseits und der Tragschiene andererseits konstant blieb. Dies hatte eine aufwendige und teure Verlegung der Antriebsschiene und der hierin geführten Antriebsmittel zur Folge.

Aus der FR 2 589 135 ist ein Fördersystem für Fahrzeugkarosserien der eingangs genannten Art bekannt geworden. Dort verläuft eine Antriebsschiene in konstanter Höhe, während eine Tragschiene sich darunter in unterschiedlicher Höhe über dem Boden erstreckt. Auf der Tragschiene läuft ein Hängewagen, an dessen senkrechten Trägern die Tragstruktur für die Karosserie höhenverschieblich angeordnet ist. Der Wagen ist also zweigeteilt ausgebildet. Diese Lösung ist recht aufwendig.

Aufgabe der vorliegenden Erfindung ist es, ein Fördersystem der eingangs genannten Art so auszubilden, daß ihr mechanischer Aufbau insgesamt preiswerter wird.

Diese Aufgabe wird erfindungsgemäß dadurch gelöst; daß
g) die Verbindungseinrichtung ein Scherengitter ist,
   wobei
h) die oberen Enden der beiden Scherenglieder in einer Weise gelenkig mit dem Antriebsmittel verbunden sind, die eine Veränderung des Abstands zwischen diesen oberen Enden gestattet, und
i) die unteren Enden der beiden Scherenglieder in einer Weise mit dem Wagen gelenkig verbunden sind, die eine Veränderung des Abstands zwischen diesen unteren Enden gestattet.

Erfindungsgemäß wird, da der vertikale Abstand zwischen dem Antriebsmittel und dem Tragschienensystem bzw. den auf diesem laufenden Wagen nicht konstant ist sondern lokal variiert, ein Scherengitter als Verbindungseinrichtung zwischen dem Antriebsmittel und dem Wagen eingesetzt, das in der Lage ist, diese lokalen Höhendifferenzen auszugleichen. Insgesamt ergibt sich so ein sehr preiswertes, dabei aber störunanfällig arbeitendes Fördersystem.

Das Scherengitter öffnet und schließt sich je nach dem vertikalen Abstand zwischen Antriebsmittel und auf dem Tragschienensystem abrollendem Wagen. Ein Scherengitter kann grundsätzlich so ausgestaltet und mit dem Antriebsmittel bzw. dem Wagen verbunden werden, daß die Kraftübertragung in beiden Richtungen (Vorwärts- und Rückwärtsrichtung) im wesentlichen symmetrisch erfolgt.

Bei dem Antriebsmittel kann es sich um eine Vielzahl aneinander anstoßender Schubstangen handeln. Die Verwendung von Schubstangen, die jeweils in sich starr sind, wird durch die vorliegende Erfindung besonders erleichtert, da ja Krümmungen des Antriebsmittels in vertikaler Richtung nicht auftreten.

Alternativ ist es möglich, daß das Antriebsmittel eine Kette ist. Auch deren Führung wird erleichtert, wenn sie nur in der horizontalen Ebene und nicht auch zusätzlich in der vertikalen Ebene Bögen durchlaufen muß.

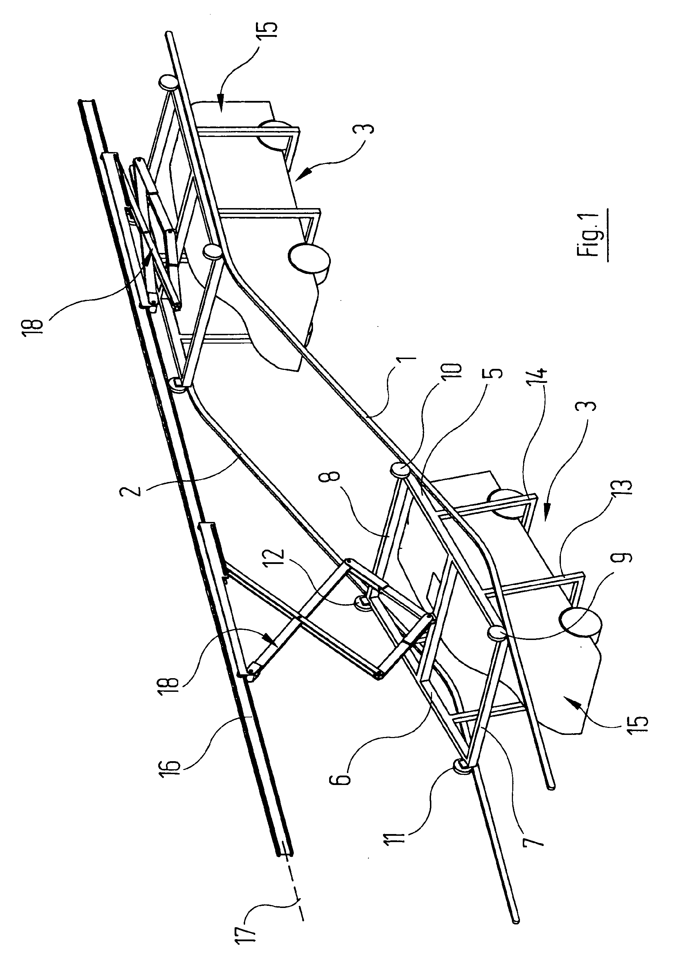

Ein Ausführungsbeispiel der Erfindung wird nachfolgend anhand der Zeichnung näher erläutert; es zeigen
- Figur 1: perspektivisch einen Ausschnitt aus einer Förderanlage für Kraftfahrzeuge;

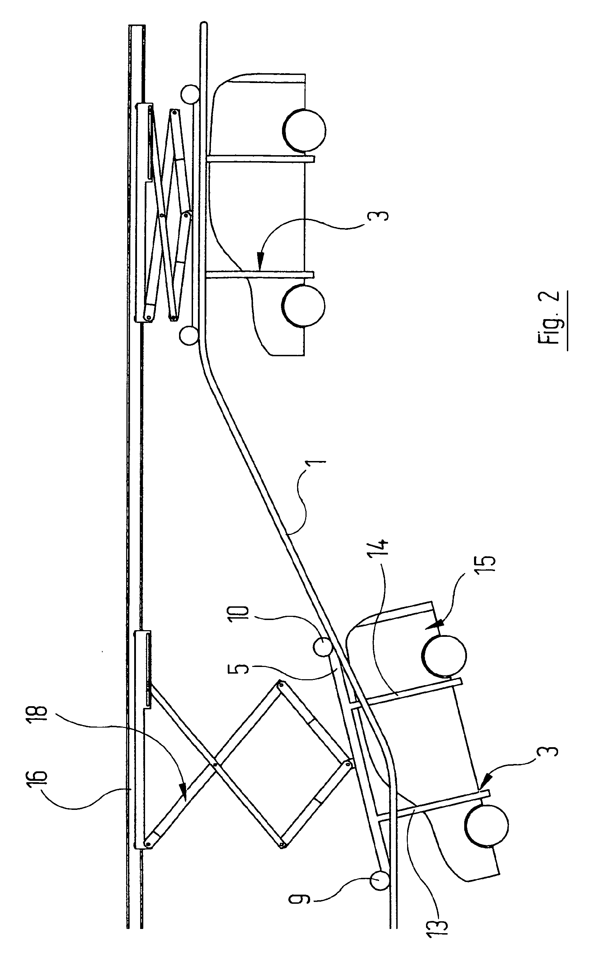

- Figur 2: die Seitenansicht zu Figur 1.

Die in der Zeichnung dargestellte Förderanlage dient dem Transport von Kraftfahrzeugen, kann aber in gleicher Weise zur Förderung beliebiger Gegenstände eingesetzt werden. Sie umfaßt ein Tragschienensystem, das aus zwei parallel zueinander verlaufenden Tragschienen 1, 2 besteht. In dem dargestellten Ausschnitt des Tragschienensystems 1, 2 überwindet dieses einen Höhenunterschied zwischen einem höheren Niveau über dem Boden, das sich rechts in den Figuren befindet, und einem niedrigeren Niveau, das sich links in den Figuren anschließt; die beiden Niveaus sind über einen geneigt zur Horizontalen verlaufenden Abschnitt ("Schrägbereich") der Tragschienen 1, 2 miteinander verbunden.

Auf den Tragschienen 1, 2 läuft eine Mehrzahl von Wagen 3. Jeder Wagen 3 besitzt einen oberen Rahmen 4, der sich seinerseits aus Längstraversen 5, 6 und Quertraversen 7, 8 zusammensetzt. An jeder Längstraverse 5, 6 sind jeweils zwei Rollen 9, 10 bzw. 11, 12 drehbar gelagert, die auf der Oberseite der jeweils zugeordneten Tragschiene 1 bzw. 2 abrollen.

Zu jedem Wagen 3 gehören ferner zwei U-förmige Tragbügel 13, 14, die starr mit dem oberen Rahmen 4 verbunden sind; sie können untereinander über eine Längstraverse verbunden sein, müssen dies aber nicht, wie dies beim dargestellten Ausführungsbeispiel der Fall ist. Die Tragbügel 13, 14 tragen das zu transportierende Kraftfahrzeug, das insgesamt mit dem Bezugszeichen 15 gekennzeichnet ist.

Oberhalb des Tragschienensystems 1, 2 erstreckt sich, in der Draufsicht etwa in der Mitte zwischen den beiden Tragschienen 1, 2 eine Antriebsschiene 16, durch welche sich ein Antriebsmittel 17 hindurch erstreckt. Bei dem Antriebsmittel 17 kann es sich um eine Förderkette oder, wie im dargestellten Ausführungsbeispiel, eine Folge aneinanderstoßender Schubstangen handeln. In der Zeichnung ist der linke Bereich der Antriebsschiene 16 weggebrochen, so daß das hierin verlaufende Antriebsmittel 17 erkennbar ist.

Im Gegensatz zum Tragschienensystem 1, 2 verläuft die Antriebsschiene 16 in einer konstanten Höhe über dem Boden im wesentlichen horizontal; sie vollzieht also den Höhenwechsel, den das Tragschienensystem 1, 2 erfährt, nicht mit.

Jeder Wagen 3 ist mit dem in der Antriebsschiene 16 sich bewegenden Antriebsmittels 17 über ein Scherengitter 18 verbunden. Die oberen Enden der Glieder des Scherengitters 18 sind mit dem Antriebsmittel 17 und die unteren Enden der Glieder des Scherengitters 18 mit der hinteren Quertraverse 8 des jeweiligen Wagens 3 gelenkig verbunden und zwar so, daß sich ihr Abstand beim Öffnen und Schließen des Scherengitters 18 verändern kann.

Das beschriebene Fördersystem arbeitet wie folgt:

Die sich auf dem Tragschienensystem 1, 2 bewegenden Wagen 3 werden durch das in der Antriebsschiene i6 laufende Antriebsmittel 17 über das Scherengitter 18 vorwärts gezogen. Ihr Gewicht wird dabei von dem Tragschienensystem 1, 2 aufgenommen. In demjenigen Bereich des Tragschienensystems 1, 2, welches sich auf einem höheren Niveau befindet, ist das Scherengitter 18 stärker zusammengedrückt als im tieferen Bereich, wie den Zeichnungen gut zu entnehmen ist.

## Patentansprüche

1. Fördersystem zum Transport von Karosserien mit
a) mindestens einer Tragschiene, die sich in unterschiedlichen Höhen über dem Boden erstreckt;
b) mindestens einem eine Karosserie aufnehmenden Wagen, der an der Tragschiene mittels Rollen abläuft;
c) mindestens einer Antriebsschiene, die oberhalb der Tragschiene verläuft und ein sich bewegendes Antriebsmittel führt;
d) mindestens einer Verbindungseinrichtung, welche eine Antriebsverbindung zwischen dem Antriebsmittel und dem Wagen herstellt,
wobei
e) die Antriebsschiene mit dem Antriebsmittel in konstanter Höhe über dem Boden verläuft;
f) die Verbindungseinrichtung so ausgestaltet ist, daß sie die lokalen Variationen des vertikalen Abstands zwischen dem Antriebsmittel und der Tragschiene auszugleichen vermag,
**dadurch gekennzeichnet, daß**
g) die Verbindungseinrichtung ein Scherengitter (18) ist,
wobei
h) die oberen Enden der beiden Scherenglieder in einer Weise gelenkig mit dem Antriebsmittel (17) verbunden sind, die eine Veränderung des Abstands zwischen diesen oberen Enden gestattet, und
i) die unteren Enden der beiden Scherenglieder in einer Weise mit dem Wagen (3) gelenkig verbunden sind, die eine Veränderung des Abstands zwischen diesen unteren Enden gestattet.

2. Fördersystem nach Anspruch 1, **dadurch gekennzeichnet, daß** das Antriebsmittel aus einer Vielzahl aneinander anstoßender Schubstangen (17) besteht.

3. Fördersystem nach Anspruch 1, **dadurch gekennzeichnet, daß** das Antriebsmittel eine Kette ist.
